# FASCICULE DE BREVET EUROPEEN

(11) **EP 1 464 872 B1**
(45) Date de publication et mention de la délivrance du brevet: **06.09.2006**
(21) Numéro de dépôt: 04300172.6
(22) Date de dépôt: 31.03.2004
(51) Int. Cl.: F16H 7/12

(54) **Tendeur de courroie d'entraînement**
Riemenspanner
Belt tensioner

(30) Priorité: 31.03.2003 FR 0303959
(43) Date de publication de la demande: 06.10.2004
(73) Titulaire: Renault s.a.s., 92100 Boulogne Billancourt (FR)
(72) Inventeur: Bartalini, Michel, 93330 Neuilly sur Marne (FR)

(56) Documents cités:
- DE-A- 2 707 247
- DE-A- 3 612 064
- DE-A- 19 849 659
- DE-C- 19 680 487

## Description

La présente invention concerne un tendeur de courroie d'entraînement utilisé sur un moteur de véhicule, comme révélé dans DE 2 707 247 A et correspondant au préambule de la revendication 1.

Plus précisément, elle concerne un tendeur de courroie d'entraînement pour moteur à combustion comportant une poulie de tension entraînée par la courroie et montée sur un support pivotant sur une pièce du moteur sous l'effet de la traction de la courroie et sous la poussée antagoniste d'un actionneur.

Les courroies d'entraînement d'organes principaux ou auxiliaires d'un moteur à combustion interne doivent être soumises en fonctionnement à une tension appropriée. En effet, une tension trop forte use la courroie, tandis qu'une courroie détendue risque de patiner et de ne pas exercer correctement sa fonction de transmission de mouvement aux organes concernés.

On connaît divers types de tendeur de courroie utilisés sur les moteurs. Un tendeur classique, dit tendeur automatique linéaire est illustré par la publication US 2002/0052260 A1. Ce tendeur de courroie comprend une poulie de tension montée sur un support pivotant et un actionneur linéaire à ressort repoussant le support pour tendre la courroie. Selon cette publication, l'actionneur dispose d'un bras de levier supérieur à celui de la poulie. Cette disposition permet au tendeur de rattraper des dispersions de longueur et un relâchement important de la courroie. Toutefois, elle impose à l'actionneur une course et des dimensions importantes, difficilement compatibles avec l'espace disponible entre les organes du moteur.

La présente invention vise à réduire l'encombrement d'un tendeur de courroie pour pouvoir l'implanter dans un environnement moteur contraignant tout en disposant d'une course d'action suffisante.

Dans ce but, elle propose que l'actionneur exerce sa poussée sur la poulie par l'intermédiaire d'un basculeur en appui contre le support de la poulie.

Selon un mode de réalisation particulier de l'invention, le basculeur pivote sur une pièce fixe du moteur.

De préférence, l'actionneur est articulé sur une pièce fixe du moteur et sur le basculeur, et l'actionneur est un actionneur linéaire à ressort.

D'autres caractéristiques et avantages de l'invention apparaîtront clairement à la lecture de la description suivante d'un mode de réalisation particulier de celle-ci, en se reportant aux dessins annexés sur lesquels :

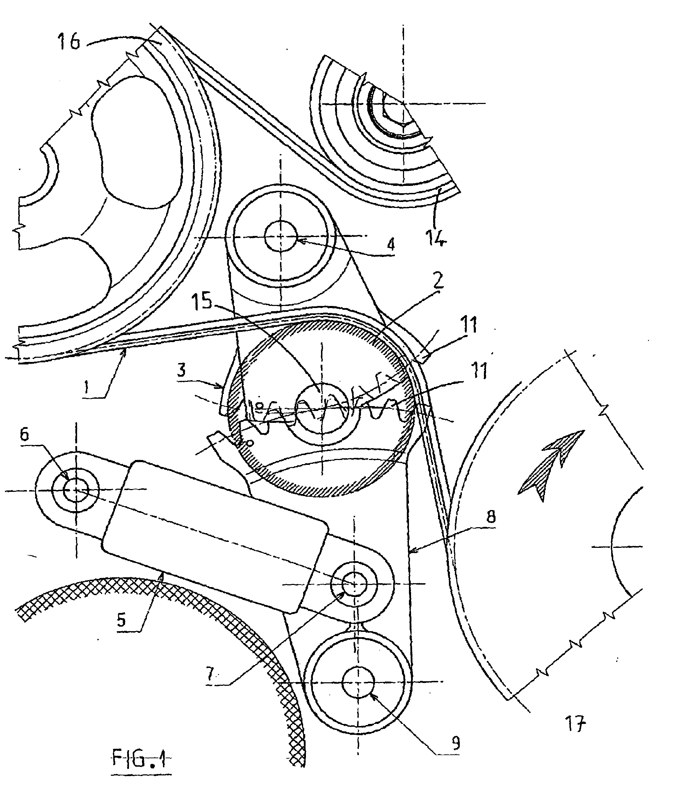

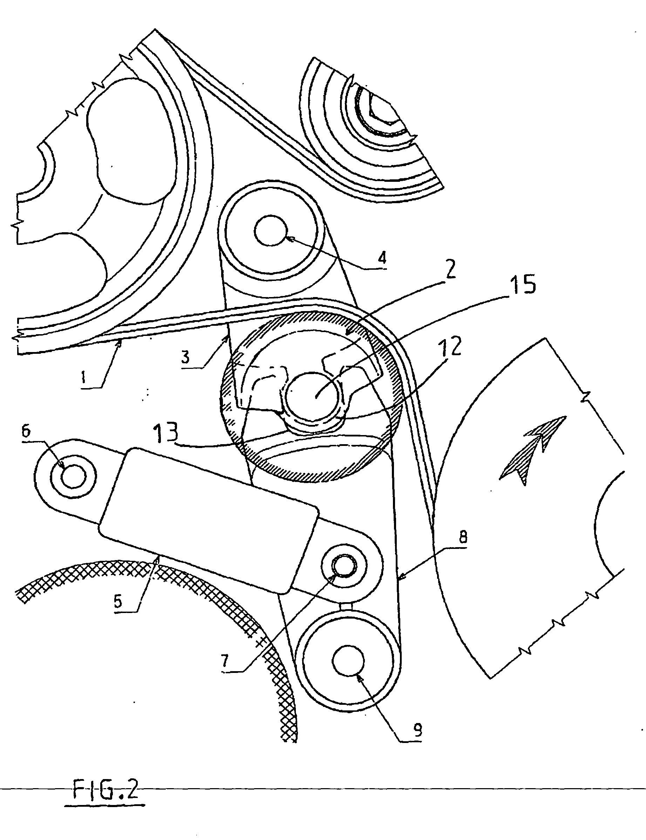

- les figures 1 et 2 illustrent deux modes de réalisation particuliers de l'invention.

Sur les figures, sans caractère limitatif pour l'environnement moteur, on a représenté une partie du trajet d'une courroie d'entraînement 1 d'organes d'un moteur, circulant entre un galet enrouleur 14, une poulie de pompe de direction assistée 16, une poulie de vilebrequin 17, et une poulie de tension 2.

Conformément à ces schémas, la tension appliquée sur le brin mou de la courroie 1 est transmise par la poulie de tension 2 entraînée par la courroie 1 et montée sur un pivot 15 d'un support 3 pivotant lui-même sur une pièce fixe 4 solidaire du moteur, sous l'effet de la traction de la courroie 1, et sous la poussée antagoniste d'un actionneur 5.

Conformément à l'invention, l'actionneur 5 exerce sa poussée sur le support 3 de la poulie 2 par l'intermédiaire d'un basculeur 8 en appui contre le support 3 de la poulie 2. Le basculeur 8 pivote sur une pièce fixe 9 du moteur et c'est lui qui reçoit la poussée de l'actionneur 5. Ce dernier est articulé sur une pièce fixe 6 du moteur et sur le pivot 7 du basculeur 8. C'est un actionneur linéaire à ressort (non représenté).

Comme indiqué plus haut, l'actionneur 5 exerce sa poussée sur le support 3 de la poulie de tension 2 par l'intermédiaire du basculeur 8 qui est en appui sur celui-ci. Plus précisément, le basculeur 8 et le support 3 de la poulie 2 sont engagés mécaniquement, de manière à obtenir un mouvement rotatif conjugué en sens opposés de ces deux éléments. Les deux figures illustrent de façon non limitative deux modes de réalisation de ces moyens d'engagement.

Sur la figure 1, le support 3 et le basculeur 8 présentent des dentures 11a, 11b en engrènement mutuel. En revanche sur la figure 2, le support 3 et le basculeur 8 présentent des découpes complémentaires engagées mutuellement. Sur cette figure, le support de poulie présente un ergot 12 engagé dans un évidement 13 de forme complémentaire du basculeur 8. Toutefois, on peut adopter la disposition inverse, à savoir que le basculeur 8 présente un ergot 12 engagé dans un évidement 13 de forme complémentaire du support de poulie, ou d'autres dispositions non représentées sur les figures.

Lorsque le ressort (non représenté) de l'actionneur 5 pousse sur le basculeur 8, celui-ci communique son effort au support de poulie 3 par l'intermédiaire des dentures 11a, 11b ou par l'intermédiaire de l'ergot 12 et de l'évidement, du support 3 puis à la poulie de tension 2, qui applique directement l'effort de tension à la courroie 1.

Selon une autre caractéristique de l'invention, le rayon du support 3 mesuré dans sa zone de contact avec le basculeur 8 est inférieur au rayon du basculeur 8 mesuré dans sa zone de contact avec le support 3.

En effet, l'introduction du basculeur intermédiaire entre l'actionneur et le support de la poulie de tension, et l'articulation de l'actionneur sur ce basculeur permet d'augmenter considérablement l'amplitude de déplacement de la poulie par rapport à la disposition connue de l'art antérieur où l'actionneur agit directement sur le support de poulie.

Grâce à l'invention, l'amplitude de déplacement de la poulie ne dépend plus seulement de la course linéaire de l'actionneur, mais elle est déterminée à partir de celle-ci, par le rapport des bras de levier du support et du basculeur.

## Revendications

1. Tendeur de courroie d'entraînement pour moteur à combustion comportant une poulie de tension (2) entraînée par la courroie (1) et montée sur un pivot (15) d'un support (3) pivotant sur une pièce (4) du moteur sous l'effet de la traction de la courroie (1) et sous la poussée antagoniste d'un actionneur (5), **caractérisé en ce que** l'actionneur (5) exerce sa poussée sur le support (3) de la poulie (2) par l'intermédiaire d'un basculeur (8) en appui contre celui-ci.

2. Tendeur de courroie selon la revendication 1, **caractérisé en ce que** le basculeur (8) pivote sur une pièce fixe (9) du moteur.

3. Tendeur de courroie selon la revendication 1 ou 2, **caractérisé en ce que** l'actionneur (5) est articulé sur une pièce fixe (6) du moteur et sur le basculeur (8).

4. Tendeur de courroie selon la revendication 1, 2 ou 3, **caractérisé en ce que** l'actionneur (5) est un actionneur linéaire à ressort.

5. Tendeur de courroie selon l'une des revendications précédentes, **caractérisé en ce que** le support (3) et le basculeur (8) présentent des dentures (11a, 11b) en engrènement mutuel.

6. Tendeur de courroie d'entraînement selon la revendication 1 ou 2, **caractérisé en ce que** le support (3) et le basculeur (8) présentent des découpes complémentaires (12, 13) engagées mutuellement.

7. Tendeur de courroie d'entraînement selon la revendication 4, **caractérisé en ce que** le support (3) présente un ergot (12) engagé dans un évidement (13) du basculeur (8).

8. Tendeur de courroie d'entraînement selon la revendication 4, **caractérisé en ce que** le basculeur (8) présente un ergot (12) engagé dans un évidement (13) du support de poulie (3).

9. Tendeur de courroie d'entraînement selon l'une des revendications précédentes, **caractérisé en ce que** le rayon du support (3) mesuré dans sa zone de contact avec le basculeur (8) est inférieur au rayon du basculeur (8) mesuré dans sa zone de contact avec le support (3).

## Claims

1. A drive belt tensioner for a combustion engine comprising a tensioning pulley (2) driven by the belt (1) and mounted on a pivot (15) of a support (3) pivoting on a member (4) of the engine under the effect of the traction of the belt (1) and under the opposing thrust of an actuator (5), **characterised in that** the actuator (5) exerts its thrust on the support (3) of the pulley (2) by means of a rocker (8) bearing against it.

2. A belt tensioner as claimed in claim 1, **characterised in that** the rocker (8) pivots on a fixed member (9) of the engine.

3. A belt tensioner as claimed in claim 1 or 2, **characterised in that** the actuator (5) is articulated on a fixed member (6) of the engine and on the rocker (8).

4. A belt tensioner as claimed in claim 1, 2 or 3, **characterised in that** the actuator (5) is a spring-mounted linear actuator.

5. A belt tensioner as claimed in one of the preceding claims, **characterised in that** the support (3) and the rocker (8) have teeth (11a, 11b) in reciprocal engagement.

6. A drive belt tensioner as claimed in claim 1 or 2, **characterised in that** the support (3) and the rocker (8) have reciprocally engaged complementary cut-out sections (12, 13).

7. A drive belt tensioner as claimed in claim 6, **characterised in that** the support (3) has a lug (12) engaged in a recess (13) of the rocker (8).

8. A drive belt tensioner as claimed in claim 6, **characterised in that** the rocker (8) has a lug (12) engaged in a recess (13) of the pulley support (3).

9. A drive belt tensioner as claimed in one of the preceding claims, **characterised in that** the radius of the support (3) measured in its zone of contact with the rocker (8) is lower than the radius of the rocker (8) measured in its zone of contact with the support (3).

## Patentansprüche

1. Spanner eines Antriebsriemens für einen Verbrennungsmotor, aufweisend eine Spannrolle (2), welche über den Riemen (1) angetrieben wird und welche auf einem Drehzapfen (15) eines Trägers (3) montiert ist, welcher auf einem Teil (4) des Motors unter der Wirkung der Zugkraft des Riemens (1) und unter der entgegenwirkenden Druckkraft eines Betätigers (5) schwenkbar ist, **dadurch gekennzeichnet, dass** der Betätiger (5) seine Druckkraft auf den Träger (3) der Rolle (2) über ein Kippglied (8) ausübt, welches gegen diesen in Anlage ist.

2. Riemenspanner nach Anspruch 1, **dadurch gekennzeichnet, dass** das Kippglied (8) auf einem festen Teil (9) des Motors schwenkt.

3. Riemenspanner nach Anspruch 1 oder 2, **dadurch gekennzeichnet, dass** der Betätiger (5) an einem festen Teil (6) des Motors und an dem Kippglied (8) angelenkt ist.

4. Riemenspanner nach Anspruch 1, 2 oder 3, **dadurch gekennzeichnet, dass** der Betätiger (5) ein Linearstellglied mit Feder ist.

5. Riemenspanner nach einem der vorangegangenen Ansprüche, **dadurch gekennzeichnet, dass** der Träger (3) und das Kippglied (8) Zahnungen (11a, 11b) aufweisen, welche gegenseitig in Eingriff sind.

6. Antriebsriemenspanner nach Anspruch 1 oder 2, **dadurch gekennzeichnet, dass** der Träger (3) und das Kippglied (8) komplementäre Ausschnitte (12, 13) aufweisen, welche gegenseitig in Eingriff sind.

7. Antriebsriemenspanner nach Anspruch 4, **dadurch gekennzeichnet, dass** der Träger (3) einen Vorsprung (12) aufweist, welcher in einer Aussparung (13) des Kippglieds (8) in Eingriff ist.

8. Antriebsriemenspanner nach Anspruch 4, **dadurch gekennzeichnet, dass** das Kippglied (8) einen Vorsprung (12) aufweist, welcher in einer Aussparung (13) des Trägers (3) der Rolle in Eingriff ist.

9. Antriebsriemenspanner nach einem der vorangegangenen Ansprüche, **dadurch gekennzeichnet, dass** der Radius des Trägers (3) gemessen in seiner Kontaktzone mit dem Kippglied (8) geringer als der Radius des Kippglieds (8) gemessen in seiner Kontaktzone mit dem Träger (3) ist.
